# EUROPEAN PATENT SPECIFICATION

(11) **EP 2 038 119 B1**
(45) Date of publication and mention of the grant of the patent: **13.01.2010**
(21) Application number: 07733441.5
(22) Date of filing: 02.07.2007
(51) Int. Cl.: B32B 27/30, B32B 27/32, B32B 27/36

(54) **HEAT-SHRINKABLE FILM**
WÄRMESCHRUMPFBARE FOLIE
FILM THERMORÉTRACTABLE

(30) Priority: 03.07.2006 GB 0613189
(43) Date of publication of application: 25.03.2009
(73) Proprietor: Fuji Seal International, Inc., Osaka-shi, Osaka 532-0003 (JP)
(72) Inventor: TOGA, Yuzo, Osaka-shi, Osaka 538-0041 (JP); UMEDA, Hideaki, Osaka-shi, Osaka 538-0041 (JP); KUROSAWA, Shutaro, Kent ME8 0RJ (GB); COATES, Phil, Bradford BD7 1DP (GB); GOUGH, Tim, Bradford BD7 1DP (GB); BURTON, Emma, Bradford BD7 1DP (GB)
(74) Representative: Setna, Rohan P.
(86) International application number: PCT/GB2007/002472
(87) International publication number: WO 2008/003946

(56) References cited:
- EP-A- 1 486 517
- EP-A1- 0 596 654
- WO-A-94/13719
- US-A- 4 443 584
- US-B2- 6 875 823

## Description

### BACKGROUND TO THE INVENTION

### Field of the invention

The present invention relates to a multi-layer heat-shrinkable film. The multi-layer film of the present invention may be used in heat-shrinkable labels such as those applied to the packaging of products.

### Description of the related prior art

The packaging and presentation of goods is recognised by product manufacturers to play an extremely important role in selling goods to consumers. One method of packaging which is becoming increasingly popular is to package a product in a plain, non-decorated container, to place a heat-shrinkable label around the container, and then to shrink the heat-shrinkable label so that it becomes tightly wrapped around the container. This technology is dependent on the properties of the heat-shrinkable label, which is generally made out of a decorated heat-shrinkable film.

This technology is appealing to product manufacturers because it can give an attractive finish to the packaging of a product at low cost. This attractive appearance is complimented by an added lustre derived from a potential full 360° decoration of the packaging. In addition, because these labels are shrunk in a controlled manner around a container, they are extremely versatile and may be easily fitted onto attractive, ergonomically-shaped packaging.

This is not as easily achieved by conventional packaging technologies. Furthermore, the marketing function of the label is not restricted to presentation, as, for example, coupons and advertising promotions can be printed on the inside of a label.

Another reason for the increasing popularity of this type of labelling is its ability to aid recycling. The label may be fitted around a container made out of recyclable material, such as plastic like polyethylene terephthalate (PET). After use, the label may either be easily removed from the container, or may be easily separated from the recyclable material during the recycling process.

Finally, heat-shrinkable labels can be manufactured to usefully incorporate quality control and safety features into the packaging, for example the label can incorporate a tamper-evidence neckband.

Heat-shrinkable films may also be used in other sectors beyond the packaging of consumer products. For example, US 5,747,742 describes the use of a heat-shrinkable film in the protective packaging of telecommunications equipment. In this patent, the barrier properties of a heat-shrinkable film are used to protect a piece of telecommunications equipment from outside contaminants.

Heat-shrinkable films are generally manufactured by extrusion. As an example, a single layer heat-shrinkable film may be manufactured by extrusion of a thermoplastic polymer from an extrusion apparatus. The polymer is loaded into a feed hopper contained at one end of the extrusion apparatus. It is then heated up to above its melting point and allowed to slowly feed along a screw contained in a barrel. The polymer is driven down the screw by a drive system, which allows for the efficient mixing of the polymer ingredients. Finally, the polymer is extruded through a flat sheet extruder die. The newly formed film is then cooled. Either during the cooling process while the film is still hot, or on re-heating after post-extrusion cooling, the film is drawn (stretched) in one direction (along one axis) to a much greater extent than along the perpendicular axis. For some applications, the film is not drawn at all along the perpendicular axis. The stretching of the film occurs below the melting point of the polymer, but above its glass transition temperature.

Decoration is added to the resulting film, and it is cut and processed into the desired shape to fit around the packaging. Finally, the label is placed around the packaging, and heat is applied. The film is heated to above its glass transition temperature, and it shrinks. The film, having been originally drawn and stretched more along one axis, shrinks along that axis when heated again above its glass transition temperature to a greater extent than along the perpendicular axis. Usually the film is orientated on the packaging so that the shrinking occurs so as to tighten the label around the packaging.

It is also possible to form a multi-layer heat-shrinkable film. In this case, the polymers contained in the various layers are co-extruded through an extruder die. WO2004/094141 gives further details of an example of this method. US 4,656,094 also describes a multi-layer film comprising a polyester resin layer and a layer of an epoxy group-containing olefin polymer. EP 1 486 517 A1 describes a laminate film comprising intermediate the layers comprising an olefin grated with an epoxy group containing ethylenically unsaturated manner.

Prior art methods of forming heat-shrinkable films have generally used either a polyester resin or a polystyrene resin to form single-layer heat-shrinkable films. Both of these polymers can produce films with high shrink percentages, the shrink percentage being defined as the percentage change of the length of the film along the axis in which the film was originally drawn during the heat-shrinking process. However, single layer films of polyester resins usually require harsh processing conditions to obtain the desired finish to the label. In contrast, films of the polystyrene resins require less harsh processing conditions, but the finished product has low abrasion resistance and strength and so has to be handled carefully once the film is formed.

Alternative materials for use in heat-shrinkable films are polyolefins. These require mild (e.g. low temperature) processing conditions, but, as described in US2002/0064611, may possess poor heat-shrink percentages.

### SUMMARY OF THE INVENTION

The present invention aims to address at least some of the problems in the prior art.

Accordingly, the present invention provides a multi-layer heat-shrinkable film comprising:
a first outer layer comprising a polyester;
a second outer layer comprising a.polyester;
an inner layer comprising a polyolefin;
a first intermediate layer between the first outer layer and the inner layer comprising polypropylene grafted with glycidyl methacrylate either directly or through a graft promoter; and
a second intermediate layer between the second outer layer and the inner layer comprising polypropylene grafted with glycidyl methacrylate either directly or through a graft promoter.

In a second aspect, the present invention provides a method of improving the interlayer bond strength between a layer comprising a polyester and a layer comprising a polyolefin, the method comprising disposing an intermediate layer between said polyester and polyolefin layers, wherein the intermediate layer comprises polypropylene grafted with glycidyl methacrylate either directly or through a graft promoter.

### BRIEF DESCRIPTION OF THE DRAWINGS

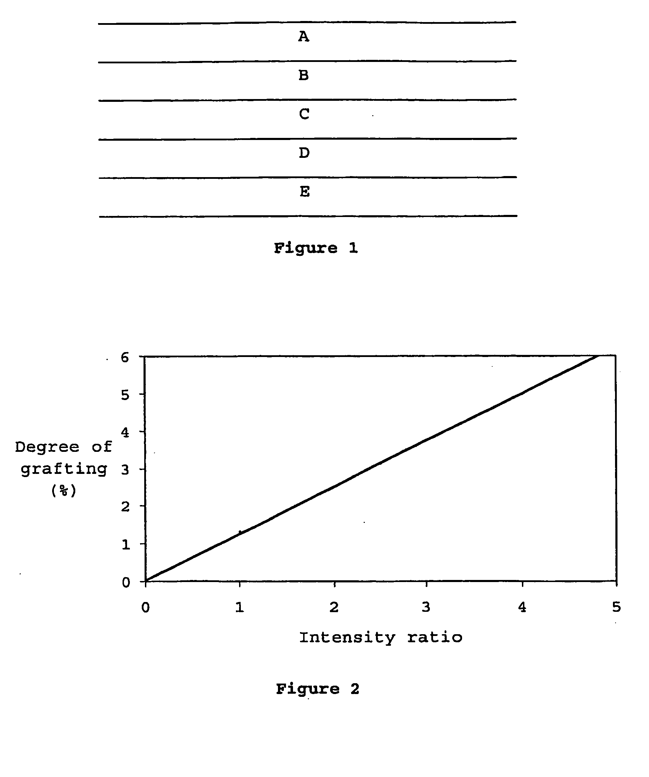

Figure 1 shows a multi-layer film according to one embodiment the present invention. The labels correspond to the different layers:
A is the first outer layer;
B is the first intermediate layer;
C is the inner (middle / core) layer;
D is the second intermediate layer; and
E is the second outer layer.

Although Figure 1 illustrates all the layers having the same thickness, it will be understood that this is only an illustration to demonstrate the layer structure according to the present invention.

Figure 2 shows the relationship between I₁₇₃₀I₂₇₂₂ (from the IR spectrum) and the degree of grafting.

### DESCRIPTION OF THE PREFERRED EMBODIMENTS

In one aspect, the present invention provides a multi-layer film with at least five layers.

The present inventors have recognised that the single layer heat-shrinkable films of the prior art are limited by the properties of the material contained in the single layer. While some of these properties are advantageous, others are considered disadvantageous. The present inventors have recognised that it is possible to gain benefit from the advantageous properties of more than one material by incorporating the materials into a multi-layer film. At the same time, by careful selection of the materials for each layer, it is possible for the disadvantageous properties of one material to be compensated for and their effect marginalized by the advantageous properties of the materials in the other layers.

The present inventors have recognised that a shrink-film made out of a single layer of polyester may have a high-shrink percentage, but must usually be processed under severe conditions to obtain the desired film finish. Whereas, a shrink-film comprising a polyolefin may usually be processed under milder conditions, but has poor heat-shrink characteristics. The present inventors have researched the possibility of combining these two materials in a multi-layer film. However, it has been found a film comprising a polyester layer adjacent to a polyolefin layer possesses poor interlayer bond strength. Therefore the present inventors have investigated the possibility of providing an intermediate layer between an outer polyester layer and an inner polyolefin layer. This layer can be considered as an adhesive layer, because it improves the interlayer bond strength of the multi-layer film. In this way, a film benefiting from the advantageous characteristics of both the polyester and polyolefin may be manufactured.

The intermediate layer according to the present invention comprises polypropylene grafted with glycidyl methacrylate (GMA) either directly or through a graft promoter. Although not wishing to be limited by theory, the grafted copolymer may favourably interact with both the olefin layer through the polypropylene backbone and also with the more polar polyester layer through the grafted GMA groups. It is believed that a grafted copolymer is favoured in this role over a simple blended mixture of poly-GMA and polypropylene because the grafted copolymer has the ability to orientate itself at an interface to maximize the beneficial interactions according to the nature of the interface. At a polar interface, such as at an interface with polyester, the GMA groups attached to the polymer backbone may accumulate. Whereas at a non-polar interface, such as at an interface with a polyolefin, interaction with the polypropylene backbone may be favoured. Furthermore, the GMA groups contain an epoxy group which may react to further strengthen interlayer bond strength.

The multi-layer heat-shrinkable film according to the present invention comprises:
a first outer layer comprising a polyester;
a second outer layer comprising a polyester;
an inner layer comprising a polyolefin;
a first intermediate layer between the first outer layer and the inner layer comprising polypropylene grafted with glycidyl methacrylate either directly or through a graft promoter; and
a second intermediate layer between the second outer layer and the inner layer comprising polypropylene grafted with glycidyl methacrylate either directly or through a graft promoter.

The preferred compositions of each of the layers are described below, followed by the preferred characteristics of the final film. It will be understood that, although the preferred compositions of each layer is described separately, each of the preferred features may be incorporated either independently or together with other preferred features of the layers.

### The outer layers (labelled A and E in Figure 1)

The film of the present invention comprises two outer layers, namely a first outer layer and a second outer layer. The compositions of these outer layers may be different from one another, or they may be selected to be the same as one another. These outer layers contain or comprise one or more polyesters. Polyester films are conventional in the art and are available in a variety of technical specifications.

A polyester is defined as a polymer containing a repeating ester functional group in the backbone of the polymer chain. A polyester may be formed, for example, by condensation of a dibasic acid with a glycol. Preferably, the polyester may be called a polyester resin, wherein a resin is defined as a man-made high polymer resulting from a chemical reaction between two or more substances.

The polyester resin can be a polyester resin which is obtained by a know process such as condensation of a diol component (monomer) and a dicarboxylic acid component (monomer) or a reactive derivative thereof, such as an ester. The dicarboxylic acid monomer preferably comprises about 95 to 100 mole % of terephthalic acid as a percentage of the total number of moles of the dicarboxylic acid component. Examples of the other dicarboxylic acid components include aliphatic dicarboxylic acids such as oxalic acid, malonic acid, succinic acid, glutaric acid, adipic acid, pimelic acid, suberic acid, azelaic acid and sebacic acid; alicyclic dicarboxylic acids such as 1,4-decahydronaphthalenedicarboxylic acid, 1,5-decahydronaphthalenedicarboxylic acid, 2,6-decahydronaphthalenedicarboxylic acid, 1,3-cyclohexanedicarboxylic acid and 1,4-cyclohexanedicarboxylic acid; and aromatic dicarboxylic acids such as isophthalic acid, 4,4'-biphenyldicarboxylic acid, trans-3,3'-stilbenedicarboxylic acid, trans-4,4'-stilbenedicarboxylic acid, 4,4'-dibenzyldicarboxylic acid, and naphthalenedicarboxylic acids including 2,6-naphthalenedicarboxylic acid. Each of these dicarboxylic acid components can be used alone or in combination.

The diol monomer preferably mainly comprises ethylene glycol in, for example 50 mole % or more as a percentage of the total number of moles of the diol component. The diol component preferably comprises ethylene glycol and 1,4-cyclohexanedimethanol in combination. Specifically, the total content of ethylene glycol and 1,4-cyclohexanedimethanol in the diol component is, for example, about 75 mole % or more (i.e. in the range of 75 to about 100 mole %), and preferably about 80 to about 100 mole %. The diol component preferably further comprises about 5 to about 20 mole % of diethylene glycol for more excellent shrinkability at low temperatures. Examples of other diol components include aliphatic diols such as propylene glycol, 1,3-propanediol, 2,2-dimethyl-1,3-propanediol, 2-methyl-2-ethyl-1,3-propanediol, 2,2-diethyl-1,3-propanediol, 2-ethyl-2-butyl-1,3-propanediol, 1,3-butanediol, 1,4-butanediol, 1,6-hexanediol, and 2,2,4-trimethyl-1,6-hexanediol; thiodiethanol, polyalkylene glycols such as dipropylene glycol, polyethylene glycol, and polypropylene glycol; alicyclic diols such as 1,2-cycloehexanedimethanol and 1,3-cyclohexanedimethanol; and aromatic diols including ethylene oxide adducts of bisphenol compounds, such as 2,2-bis(4'-β-hydroxyethoxydiphenyl)propane and bis(4'-β-hydroxyethoxyphenyl)sulfone, and xylylene glycol. Each of these diol components can be used alone or in combination.

Examples of commercially-available polyester resins suitable for using in the present invention include: "Novapex" manufacture by Mitsubishi Chemical, "Easter Copolyester" manufacture by Eastman Chemical and "Embrace" also manufacture by Eastman Chemical.

The inventors have recognised that polyesters are ideal polymers for the outer layer. These polymers may be strong and impact-resistant when drawn out into a film. The outer layer therefore imparts strength to the film. In addition, the final label does not require special handling conditions in storage and transit because it is reasonably resistant to impacts and scratching.

Preferably, for ease of processing, the intrinsic viscosity of the polyester resin is in the range of 0.5 to 0.9 dl/g, more preferably in the range of 0.7 to 0.8 dl/g.

Preferably, the polyester resin should also have a sufficiently low glass transition temperature so that the shrinking of the film occurs at a reasonable temperature. However, the glass transition temperature should not be too low, which may lead to low strength of the film under normal handling conditions. Therefore the polyester resin preferably has a glass transition temperature in the range of 50 to 100°C, more preferably in the range of 60 to 80°C.

The preferred thickness of the outer layers are in the range of 1 to 10 µm, more preferably in the range of 2 to 5 µm.

### The inner layer (C in Figure 1)

The film of the present invention comprises an inner (middle / core) layer. This inner layer comprises one or more polyolefins. Polyolefin films are conventional in the art and are available in a variety of technical specifications.

A polyolefin (or polyalkylene) is a polymer which may be produced from the polymerization of alkene monomers. Accordingly, the polyolefin may be a copolymer of more than one alkene. In the present invention, the polyolefin preferably comprises ethyl, propyl, iso-propyl and / or butyl units. These units are selected so that the polyolefin layer can be easily processed into a film.

Preferably, the polyalkylene is a random copolymer of ethylene and propylene. Preferably, the inner layer further comprises one or both of hydrogenated petroleum hydrocarbon resin and / or Linear Low Density PolyEthylene (LLDPE). The present inventors have found that a film containing some or all of these polymers have a high shrink percentage. In addition, the shrink characteristics of this layer are suitable for broad application as a shrink film. In particular, the layer preferably shrinks at a rate which does not result in the uncontrolled shrinkage of the label onto the container. The uncontrolled shrinking of a film is caused by the layer shrinking at too fast a rate, and can give rise to wrinkling and tearing of the label.

Examples of commercially-available polyolefins suitable for use in the present invention include "Novatec" manufactured by Japan Polypropylene, "Wintec" also manufactured by Japan Polypropylene and "Kernel" manufactured by Japan Polyethylene.

Preferably, the density of the inner layer is in the range of 0.80 to 0.95 gcm⁻³, more preferably in the range of 0.88 to 0.92 gcm⁻³.

Preferably, for ease of processing the melt flow index as defined below of the inner layer is in the range of 0.1 to 10, more preferably in the range of 1 to 5.

Preferably for ease of processing, the melting point of the inner layer is in the range of 100-150°C, more preferably 120 to 140°C.

The preferred thickness of the inner layer is in the range of 5 to 50 µm, more preferably in the range of 10 to 30 µm.

### The intermediate layers (B and D in Figure 1)

The film of the present invention comprises two intermediate layers located in between the two outer layer and the inner (core) layer. The first intermediate layer is located in between the first outer layer and the inner layer; the second intermediate layer is located in between the second outer layer and the inner layer. The compositions of the intermediate layers may be different from one another, or they may be selected to be the same as one another.

The intermediate layers contain or comprise polypropylene grafted with glycidyl methacrylate either directly or through a graft promoter.

The intermediate (adhesive) layer should interact favourably with both the inner layer and the outer layer. This increases the interlayer bond strength because, as described above, the interlayer bond strength between a polyester layer and a polyolefin layer without an intermediate layer has been found by the present inventors to be relatively low. Accordingly, the present invention provides for a polypropylene / GMA grafted copolymer to act as the intermediate layer.

The degree of grafting describes the weight percentage of GMA in the polymer. In other words, a notional GMA / polypropylene grafted copolymer with a degree of grafting of 10% is a polymer containing 10 grams of GMA per 100 grams of polymer.

The degree of grafting may be assessed by infrared spectroscopy. An IR spectrum of the sample may be measured by pressing 0.1 mm thickness films of the sample with, for example, a Specac 10 tonne manually operated hydraulic press. Typically the film is pressed at 130°C at 2 tons. In the IR spectrum, the C=O stretch of the α,β-unsaturated carbonyl in the ester group of the GMA appears at approximately 1730 cm⁻¹, and the CH-CH₃ stretch of the polypropylene backbone appears at approximately 2722 cm⁻¹. The relative intensity of these two peaks is then measured (I₁₇₃₀/I₂₇₂₂) and the degree of grafting is determined by comparison with literature values (Pracella, Chinna; Macromol. Symp. 198, 161-171 (2003)). The linear relationship between I_{1730/}I₂₇₂₂ and the degree of grafting established by Pracella and Chinna is reproduced in Figure 2. This linear relationship can be extrapolated to higher degrees of grafting. The value determined by this method is then taken as the degree of grafting.

¹H NMR can be used to confirm the accuracy of the IR measurement of the degree of grafting. The spectrum is preferably taken on a high powered NMR machine, preferably at least 600 MHz. The spectrum is taken in 1,1,2,2-tetrachloroethane-d2 at 140°C. The grafting ratio may then be confirmed by integrating the proton signals from the protons on the polypropylene backbone (between 1.2 and 2.0 ppm) and the signals from the GMA (between 3.5 and 4.5 ppm).

The present inventors have found that the effectiveness of the adhesive layer is increased by increasing the degree of grafting of the copolymer. Accordingly, the degree of grafting is preferably at least 0.1%, and more preferably at least 1%, for example at least 4%.

However, at high values of the degree of grafting, the interaction of the polypropylene backbone with the polyolefin layer may be diminished. Accordingly, the degree of grafting is preferably less than 15%, preferably less than 10%.

A preferred degree of grafting to achieve the desired adhesion is 1 to 15 %, more preferably 4 to 15%, and still more preferably it should be about 8%.

GMA may be grafted to the polypropylene backbone through an optional graft promoter. Graft promoters are well-known in the art. The inventors have found that a particularly advantageous graft promoter for the present system is styrene.

A graft promoter is incorporated to increase the degree of grafting of the GMA. During the formation of the grafted copolymer, a radical initiator extracts a hydrogen atom from the tertiary centre on the polypropylene backbone. The newly formed polypropylene chain radical does not react very quickly with GMA by itself, and therefore products from side reactions become important. One important side reaction is β-scission of the polypropylene chain, leading to a lower average molecular weight polypropylene backbone. Although this is not necessarily an unwanted reaction in itself, because a large polymer chain can be broken down into smaller polymer chains, thereby decreasing the viscosity and increasing the melt flow index of the polymer (affecting the film-forming properties of the polymer), it means that rate of production of the grafted product is reduced. Accordingly, the GMA is optionally bonded to the polypropylene backbone through a graft promoter.

Ideally, the graft promoter is present at the same molar level as the GMA, because at every point where the polypropylene has reacted with a graft promoter monomer, the graft promoter has gone on to react with GMA.

The present inventors have found that, when styrene is used as a graft promoter, the melt flow index of the resulting grafted copolymer is reduced compared to the same grafted copolymer without the presence of the graft promoter. Therefore, when styrene is used as a graft promoter, the overall degree of grafting of the GMA is less than 10%, ideally around 7% to 8%.

Preferably, the copolymer has a melt-flow index of 0.1 to 20, preferably 2 to 20. Preferably the copolymer has a melt-flow index of less than 10, and more preferably in the range of 2 to 8. The melt flow index is well known to those in the art, and is measured by the International Standard ISO R1133. A high melt flow index reflects a low viscosity; whereas a low melt flow index reflects a high viscosity.
The present inventors have recognised that it is beneficial for the copolymer to have a melt flow index of between 0.1 and 20 so that the copolymer may be more easily drawn out into a film. If the copolymer has too high a melt flow index, it will be very runny and difficult to control while processing; whereas if the copolymer has too low a melt flow index, it will be viscous, sticky, and difficult to draw out into sheets.

It will be appreciated that the melt flow index for the intermediate layer (or for that matter any of the other layers in the multi-layer film) may be adjusted by blending with other constituents.

The copolymer may also be characterized by Gel Permeation Chromatography (GPC). Preferably, the molecular weight (M_{w}) of the copolymer characterized by GPC is between 50,000 and 500,000. More preferably, it is in the range of 100,000 to 250,000. Preferably, the polydispersity (as defined as M_{w} / Mₙ) of the polymer is in the range of 1 to 3.5. Preferably, it is below 2.5.

Preferably, the melting point of the inner layer is in the range of 100 to 200°C.

The preferred thickness of the intermediate layers are 1 to 10 µm, more preferably 2 to 5 µm.

The polypropylene / GMA grafted copolymer may be synthesised, for example, by adding an initiator to a polypropylene, GMA and styrene mixture. A suitable commercially-available polypropylene polymer for use in the manufacture of the grafted copolymer is "Wintec" manufactured by Japan Polypropylene. Preferably, the radical initiator is a peroxide. More preferably, it is one or more of dicumyl peroxide and Luperox 101. GMA is also preferably provided in 2 to 40 wt % (i.e. 2 to 40 % as a percentage of the total weight of the ingredients). More preferably, GMA is provided in 5 to 20 wt %.

US 6,028,146 describes the free radical grafting of monomers onto polypropylene resins.

### The heat-shrinkable film

The multi-layer heat-shrinkable film comprises at least five layers as defined above. The multi-layer film of the present invention is provided in both its non-shrunken form - i.e. after its manufacture but prior to the shrinking treatment - and in its shrunken form, after the heat-shrinking treatment.

The present inventors have identified a number of characteristics that a heat-shrinkable film for a heat-shrinkable label should possess for it to perform its function efficiently.

In particular, the interlaminar bond strength should be sufficiently high. Interlaminar bond strength indicates the tensile strength at the time when delamination occurs in a tensile test method. It can be measured by cutting a 300 µm thick non-stretched sheet of the film in a transverse direction to a length in a machine direction of 30 mm. A T-type peel test then is carried out according to Japanese Industrial Standards (JIS) K 6854-3 where a peeling (delamination) force between the outer and inner layers is measured, and the average force over between 50 and 250 mm of cross-head displacement is defined as the intermediate bond strength (N/30-mm). Preferably, the interlaminar bond strength is above 2.0 N/30-mm. More preferably, the interlaminar bond strength is above 3.5 N/30-mm, and more preferably above 5 N/30-mm.

The multi-layer film should preferably possess a sufficient shrink percentage, so that the label fits around the packaging as desired. Preferably, the shrink..percentage of the film when treated at 90°C for 10 seconds is in the range of 15 to 70%. More preferably the shrink percentage under these conditions is in the range of 30 to 70%. The present inventors have carefully selected the compositions of the layers so that the label may adequately perform its function as a heat-shrinkable label.

Preferably, the relative thicknesses of the layers A to E are in the following proportions:
- the thickness of the inner layer is T_{I};
- the thickness of intermediate layers are independently preferably in the range of 0.1T_{I} to T_{I}, more preferably in the range of 0.2T_{I} to 0.5T_{I;} and
- the thickness of the outer layers are independently preferably in the range of 0.1T_{I} to T_{I}, more preferably in the range of 0.2T, to 0.5T_{I}.

The film (layers A to E combined) preferably has a thickness in the range of 10 to 80 µm, more preferably in the range of 20 to 50 µm. If the film is too thick, it is harder to obtain the desired shrink percentages. However, if the film is too thin, it tends to be too weak and susceptible to damage during processing.

Finally, the film should have certain aesthetic qualities. In particular, it should be optically transparent, and give an impressive, alluring finish when applied to a container.

In a second aspect of the present invention, a method of improving the interlayer bond strength between a layer comprising a polyester and a layer comprising a polyolefin is provided, the method comprising disposing an intermediate layer between said polyester and polyolefin layers, wherein the intermediate layer comprises polypropylene grafted with glycidyl methacrylate either directly or through a graft promoter.

The various preferred and optional features described in relation to the first aspect of the present invention are equally applicable to the second aspect.

### EXAMPLES

Nine films were manufactured with the properties shown in Table 1. The following commercially-sourced materials were used:
polyester: manufactured under the trade name of "Embrace 21214" by Eastman Chemical;
polypropylene: manufactured under the trade name of "Wintec WFX6" by Japan Polypropylene;
polyethylene: manufactured under the trade name "Kernel 260T" by Japan Polyethylene; and
hydrogenated petroleum hydrocarbon resin: manufactured under the trade name of "Arkon P125" by Arakawa Chemical.

The GMA grafted polypropylene was synthesised by adding a peroxide radical initiator selected from dicumyl peroxide and Luperox 101 to a mixture of polypropylene (manufacture under the trade name of "Wintec WFX6" by Japan Polypropylene), GMA and styrene.

In order to manufacture the five layer film of sample 1 in Table 1, the following components were placed in separate extruders and co-extruded through a T-die (1 mm of lip opening) with a feed block merging system:
For outer layers A and E: 100 parts by weight of the polyester resin at 230°C
For inner layer C: 100 parts by weight of the polypropylene at 200°C (for inner layer C),
For intermediate layers B and D: 100 parts by weight of the polypropylene grafted with GMA with a degree of grafting of 4% at 200°C.

The co-extrudate was then quenched on a cooling drum at 30°C to form a five-layer sheet as shown in figure 1 consisting of 3 different components. The total thickness of the film was approximately 300 micrometers with the thickness ratio of the layers in the film adjusted to be A:B:C:D:E = 1:1:4:1:1. The (un-stretched) sheet was then used to measure interlaminar bond strength and compressive strength, and the results are shown in Table 1.

Compressive strength was measured by cutting a 150mm by 15 mm rectangle from the film. The two ends of the rectangle were brought together so as to form a hollow cylinder 150 mm in circumference and 15 mm in height. The compressive strength was then measured by the ring crush method. Force was applied evenly to the top of the hollow cylinder structure. The force to compress the ring by 10 mm (or, in other words, so that the cylinder had a height of only 5 mm) was measured.

Another multi-layer sheet was prepared by the same method, and subsequently drawn to 1.1-fold extension in the machine direction followed by 5-fold stretching in the transverse direction. The thickness of the resulting shrink film was approximately 40 micrometers with the thickness ratio of the layers in the film adjusted to be A:B:C:D:E = 1:1:4:1:1. This film was then used to measure shrinkage, natural shrinkage, haze and finish via hot air and via steam. The results are shown in Table 1.

The shrinkage was measured by heating the film up to 90°C for 10 seconds and then allowing it to cool. The shrinkage is then defined as the percentage reduction in the length of the film along the axis in which it was originally stretched. The natural shrinkage is measured by cutting a 100 mm by 100 mm square section of the film and leaving it at 30°C for 30 days. The natural shrinkage is then defined as the percentage reduction in the length of the film along the axis in which it was originally stretched. Haze was measured by international standard ASTM D1003. The finish by hot air and steam were carried by conventional methods; the finish was then judged from an aesthetic point of view by eye.

Samples 2 to 9 were prepared with the same apparatus and method as described above for sample 1 with the variation in compositions described in Table 1. These films were also evaluated under the same test method as sample 1.

The properties of the resulting films are also shown in Table 1, with the definitions of the symbols 'A', 'B' and 'C' given in Table 2. It is preferable that a film exhibits one or more of the properties defined as 'A' and/or 'B' in Table 2. It can be seen in Table 1 that as the degree of grafting increases in the polymer in the intermediate layers, the interlaminar bond strength also increases. All the samples performed very well, the most impressive being samples 8 and 9 which both use a grafted copolymer in the intermediate layers with a degree of grafting of 12%.

**Table 1**

| | | Sample | | | | | | | | |
|---|---|---|---|---|---|---|---|---|---|---|
| | | 1 | 2 | 3 | 4 | 5 | 6 | 7 | 8 | 9 |
| Thickness ratio | Outer:Intermediate:Inner:Intermediate:Outer | 1:1:4:1:1 | | | | | | | | |
| Outer layer | Polyester | 100 | 100 | 100 | 100 | 100 | 100 | 100 | 100 | 100 |
| Intermediate layer | GMA grafted Polypropylene | 100 | 100 | 100 | 100 | 100 | 100 | 100 | 100 | 100 |
| Inner layer | Polypropylene | 100 | 75 | 70 | 100 | 75 | 70 | 100 | 75 | 70 |
| | Polyethylene | 0 | 0 | 5 | 0 | 0 | 5 | 0 | 0 | 5 |
| | Hydrogenated petroleum hydrocarbon resin | 0 | 25 | 25 | 0 | 25 | 25 | 0 | 25 | 25 |
| Intermediate layer | Degree of grafting | 4 | 4 | 4 | 8 | 8 | 8 | 12 | 12 | 12 |
| Functionality | Shrinkage | B | A | A | B | A | A | B | A | A |
| | Natural shrinkage | B | A | A | A | A | A | A | A | A |
| | Compressive strength | B | B | B | B | A | A | A | A | A |
| | Interlaminar bond strength | B | B | B | A | A | A | A | A | A |
| | Haze | A | A | B | A | A | B | A | A | B |
| | Finish via hot air | B | B | A | B | B | A | B | B | A |
| | Finish via steam | B | A | A | B | A | A | B | A | A |

**Table 2**

| | |
|---|---|
| Shrinkage | A: >30%, B: >25%, C: >15%, D: <15% |
| Natural shrinkage | A: <1.0%, B: <1.5%, C:<2.0%, D:>2.0% |
| Compressive strength | A: >5N, B: >3.5N, C: 2N, D: <2N |
| Interlaminar bond strength | A: Substrate break, B: >5N/30-mm, C: >2N/30-mm, D: <2N/30-mm |
| Haze | A: <2%, B: <5%, C: <10%, D: >10% |
| Finish via hot air | A: Excellent, B: Good, C: No good |
| Finish via steam | A: Excellent, B: Good, C: No good |

## Claims

1. A multi-layer heat-shrinkable film comprising:
a first outer layer comprising a polyester;
a second outer layer comprising a polyester;
an inner layer comprising a polyolefin;
a first intermediate layer between the first outer layer and the inner layer comprising polypropylene grafted with glycidyl methacrylate either directly or through a graft promoter; and
a second intermediate layer between the second outer layer and the inner layer comprising polypropylene grafted with glycidyl methacrylate either directly or through a graft promoter.

2. A multi-layer heat-shrinkable film as claimed in claim 1, wherein the first outer layer and/or the second outer layer comprises a polyester resin.

3. A multi-layer heat-shrinkable film as claimed in claim 1 or claim 2, wherein the inner layer comprises polypropylene and/or polyethylene.

4. A multi-layer heat-shrinkable film as claimed in any one of the preceding claims, wherein the inner layer comprises a random copolymer of ethylene and propylene.

5. A multi-layer heat-shrinkable film as claimed in any one of the preceding claims, wherein the inner layer further comprises a hydrocarbon resin.

6. A multi-layer heat-shrinkable film as claimed in claim 5, wherein the hydrocarbon resin comprises a hydrogenated petroleum hydrocarbon resin.

7. A multi-layer heat-shrinkable film as claimed in any one of the preceding claims, wherein the first intermediate layer and/or the second intermediate layer comprises polypropylene grafted with glycidyl methacrylate using a graft promoter, and wherein the graft promoter comprises styrene.

8. A multi-layer heat-shrinkable film as claimed in any one of the preceding claims, wherein the degree of grafting of glycidyl methacrylate onto the polypropylene chain optionally through a graft promoter in the first intermediate layer and/or the second intermediate layer is up to 15%.

9. A multi-layer heat-shrinkable film as claimed in claim 8, wherein the degree of grafting in the first intermediate layer and/or the second intermediate layer is up to 10%.

10. A multi-layer heat-shrinkable film as claimed in any one of the preceding claims, wherein the melt flow index of the first and/or second intermediate layer(s) is from 2 to 20.

11. A method of improving the interlayer bond strength between a layer comprising a polyester and a layer comprising a polyolefin, the method comprising disposing an intermediate layer between said polyester and polyolefin layers, wherein the intermediate layer comprises polypropylene grafted with glycidyl methacrylate either directly or through a graft promoter.

## Patentansprüche

1. Wärmeschrumpfbare Mehrschichtfolie, welche Folgendes aufweist:
eine Polyester aufweisende erste Außenschicht;
eine Polyester aufweisende zweite Außenschicht;
eine Polyolefin aufweisende Innenschicht;
eine erste Zwischenschicht zwischen der ersten Außenschicht und der Innenschicht, wobei die Zwischenschicht Polypropylen aufweist, auf welches Glycidylmethacrylat entweder direkt oder mit Hilfe eines Pfropfungs-Promotors aufgepfropft wird; und
eine zweite Zwischenschicht zwischen der zweiten Außenschicht und der Innenschicht, wobei die Zwischenschicht Polypropylen aufweist, auf welches Glycidylmethacrylat entweder direkt oder mit Hilfe eines Pfropfungs-Promotors aufgepfropft wird.

2. Wärmeschrumpfbare Mehrschichtfolie nach Anspruch 1, **dadurch gekennzeichnet, dass** die erste Außenschicht und/oder die zweite Außenschicht ein Polyesterharz aufweisen.

3. Wärmeschrumpfbare Mehrschichtfolie nach Anspruch 1 oder Anspruch 2, **dadurch gekennzeichnet, dass** die Innenschicht Polypropylen und/oder Polyethylen aufweist.

4. Wärmeschrumpfbare Mehrschichtfolie nach einem der vorhergehenden Ansprüche, **dadurch gekennzeichnet, dass** die Innenschicht ein Random-Copolymer aus Ethylen und Propylen aufweist.

5. Wärmeschrumpfbare Mehrschichtfolie nach einem der vorhergehenden Ansprüche, **dadurch gekennzeichnet, dass** die Innenschicht des Weiteren Kohlenwasserstoffharz aufweist.

6. Wärmeschrumpfbare Mehrschichtfolie nach Anspruch 5, **dadurch gekennzeichnet, dass** das Kohlenwasserstoffharz ein hydriertes Erdöl-Kohlenwasserstoffharz aufweist.

7. Wärmeschrumpfbare Mehrschichtfolie nach einem der vorhergehenden Ansprüche, **dadurch gekennzeichnet, dass** die erste Zwischenschicht und/oder die zweite Zwischenschicht Polypropylen aufweist bzw. aufweisen, auf welches Glycidylmethacrylat aufgepfropft wird, indem ein Pfropfungs-Promotor verwendet wird, und dass der Pfropfungs-Promotor Styrol aufweist.

8. Wärmeschrumpfbare Mehrschichtfolie nach einem der vorhergehenden Ansprüche, **dadurch gekennzeichnet, dass** der Grad der Pfropfung von Glycidylmethacrylat auf die Polypropylenkette optional mit Hilfe eines Pfropfungs-Promotors in der ersten Zwischenschicht und/oder der zweiten Zwischenschicht bis zu 15% beträgt.

9. Wärmeschrumpfbare Mehrschichtfolie nach Anspruch 8, **dadurch gekennzeichnet, dass** der Pfropfungsgrad in der ersten Zwischenschicht und/oder der zweiten Zwischenschicht bis zu 10% beträgt.

10. Wärmeschrumpfbare Mehrschichtfolie nach einem der vorhergehenden Ansprüche, **dadurch gekennzeichnet, dass** der Schmelz-Index der ersten und/oder zweiten Zwischenschicht(en) von 2 bis 20 reicht.

11. Verfahren zur Verbesserung der Zwischenschicht-Bindungsstärke zwischen einer Polyester aufweisenden Schicht und einer Polyolefin aufweisenden Schicht, wobei das Verfahren die Anordnung einer Zwischenschicht zwischen den Polyester- und Polyolefinschichten aufweist, **dadurch gekennzeichnet, dass** die Zwischenschicht Polypropylen aufweist, auf welches Glycidylmethacrylat entweder direkt oder mit Hilfe eines Propfungs-Promotors aufgepfropft wird.

## Revendications

1. Film thermorétractable multi-couche comprenant:
une première couche externe comprenant un polyester;
une deuxième couche externe comprenant un polyester;
une couche interne comprenant une polyoléfine;
une première couche intermédiaire entre la première couche externe, et la couche interne comprenant du polypropylène greffé de glycidyl méthacrylate soit directement soit par un promoteur de greffe; et
une deuxième couche intermédiaire entre la deuxième couche externe et la couche interne comprenant du polypropylène greffé avec du glycidyl méthacrylate soit directement soit par un promoteur de greffe.

2. Film thermorétractable multi-couche selon la revendication 1, dans lequel la première couche externe et/ou la deuxième couche externe comprend une résine de polyester.

3. Film thermorétractable multi-couche selon la revendication 1 ou la revendication 2, dans lequel la couche interne comprend du polypropylène et/ou polyéthylène.

4. Film thermorétractable multi-couche selon l'une quelconque des revendications précédentes, dans lequel la couche interne comprend un copolymère aléatoire d'éthylène et de propylène.

5. Film thermorétractable multi-couche selon l'une quelconque des revendications précédentes, dans lequel la couche interne comprend en outre une résine d'hydrocarbure.

6. Film thermorétractable multi-couche selon la revendication 5, dans lequel la résine d'hydrocarbure comprend une résine d'hydrocarbure de pétrole hydrogéné.

7. Film thermorétractable multi-couche selon l'une quelconque des revendications précédentes, dans lequel la première couche intermédiaire et/ou la deuxième couche intermédiaire comprend du polypropylène greffé avec du glycidyl méthacrylate en utilisant un promoteur de greffe, et où le promoteur de greffe comprend du styrène.

8. Film thermorétractable multi-couche selon l'une quelconque des revendications précédentes, dans lequel le degré de greffage du glycidyl méthacrylate sur la chaîne de polypropylène optionnellement par un promoteur de greffe dans la première couche intermédiaire et/ou la deuxième couche intermédiaire s'élève jusqu'à 15%.

9. Film thermorétractable multi-couche selon la revendication 8, dans lequel le degré de greffage dans la première couche intermédiaire et/ou la deuxième couche intermédiaire s'élève jusqu'à 10%.

10. Film thermorétractable multi-couche selon l'une quelconque des revendications précédentes, dans lequel l'indice de fluage des première et/ou deuxième couches intermédiaires est de 2 à 20.

11. Procédé pour améliorer la résistance de la liaison entrecouche entre une couche comprenant un polyester et une couche comprenant une polyoléfine, le procédé comprenant la disposition d'une couche intermédiaire entre lesdites couches de polyester et de polyoléfine, où la couche intermédiaire comprend du polypropylène greffé avec du glycidyl méthacrylate soit directement soit par un promoteur de greffe.
